# NOUVEAU FASCICULE DE BREVET EUROPEEN

(11) **EP 0 616 921 B2**
(45) Date de publication et mention de la décision concernant l'opposition: **16.08.2001**
(45) Mention de la délivrance du brevet: 29.12.1997
(21) Numéro de dépôt: 94400643.6
(22) Date de dépôt: 25.03.1994
(51) Int. Cl.: B60Q 3/04, G02B 6/42, F21V 8/00, B60K 35/00

(54) **Tableau de bord de faible épaisseur, pour véhicule automobile**
Armaturenbrett mit verringerter Dickenabmessung für ein Fahrzeug
Thin instrument panel for motor vehicles

(30) Priorité: 25.03.1993 FR 9303444
(43) Date de publication de la demande: 28.09.1994
(73) Titulaire: MAGNETI MARELLI FRANCE, 92000 Nanterre (FR)
(72) Inventeur: Bezard, Jean-Jacques, F-78400 Chatou (FR); Jury, Catherine, F-92400 Courbevoie (FR); Wroblewski, Jérôme, F-93800 Epinay S/Seine (FR); Bonutto, Alain, F-95220 Herblay (FR)
(74) Mandataire: Martin, Jean-Jacques

(56) Documents cités:
- EP-A- 0 478 102
- EP-A- 0 505 221
- EP-A- 0 547 943
- EP-A1- 0 498 451
- EP-A2- 0 110 063
- WO-A-92/19992
- DE-A- 2 754 618
- DE-A- 3 202 080
- DE-A1- 3 123 369
- DE-A1- 3 618 516
- DE-A1- 4 105 547
- DE-A1- 4 121 248
- DE-U- 9 002 305
- FR-A- 2 213 559
- FR-A- 2 324 006
- FR-A- 2 626 536
- FR-A1- 2 467 727
- GB-A- 2 015 161
- GB-A- 2 051 404
- GB-A- 2 119 729
- GB-A- 2 121 583
- GB-A- 2 234 581
- JP-A- 1 309 086
- US-A- 3 043 948
- US-A- 4 233 927
- US-A- 4 324 986
- PATENT ABSTRACTS OF JAPAN vol. 14, no. 111 (P-1014) 28 Février 1990 & JP-A-01 309 086 (FUJITSU LTD) 8 Juin 1988
- SAE-Paper 820005
- SAE-Paper820009
- SAE-Paper 820514
- Broschüre: "Technische Information Instrumententechnik", VDO Adolf Schindling AG, Schwalbach/Ts. (DE), 09.1989, Seiten 1-23.
- Stute, Dieter: "Informationsträger aus Polycarbonatfolien - Die durchleuchtende Lösung für Automobil-Cockpits"; DE Publikation: PLASTverarbeiter, 35. Auflage, 1964, Nr 1, Seiten 12-16, Zechner & Hültig Verlag, Heidelberg (DE).

## Description

La présente invention concerne le domaine des tableaux de bord, pour véhicules automobiles.

On sait que les tableaux de bord sont des systèmes réunissant différents dispositifs indicateurs pour délivrer diverses informations, telles que vitesse, régime moteur, niveau carburant, température, niveau d'huile, voire différents signaux d'alarme, aux conducteurs de véhicules.

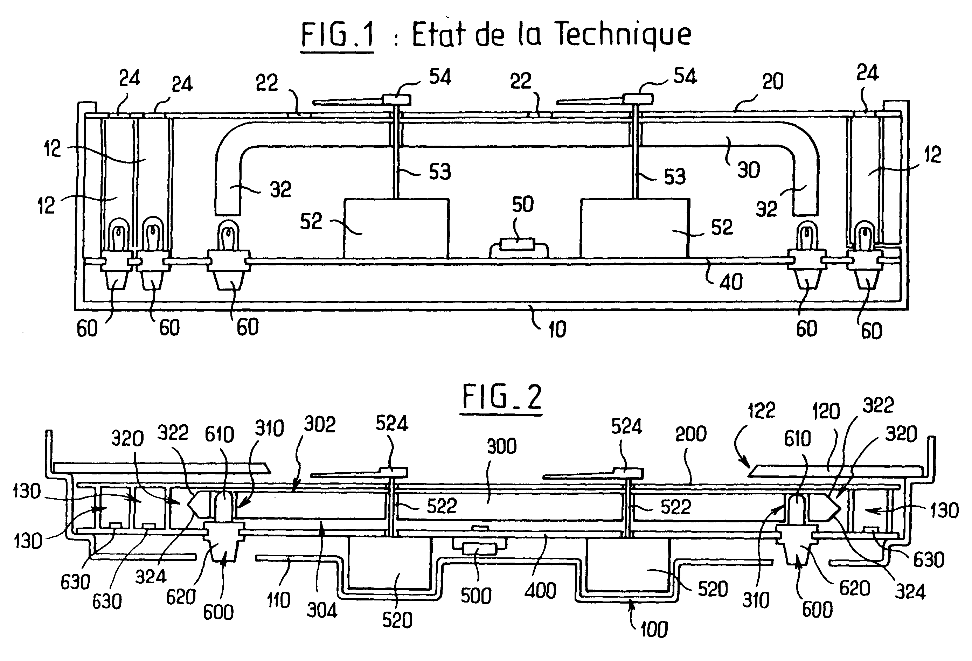

Les tableaux de bord commercialisés de nos jours sont généralement formés, comme représenté sur la figure 1, d'un ensemble comprenant un boitier 10, formé le plus souvent par assemblage de différentes parties et qui loge :
- un cadran 20 opaque sur la majeure partie de sa surface, comprenant cependant des premières plages 22 translucides définissant des échelles de graduations et des secondes plages translucides 24 représentant des symboles illustrant certaines informations,
- une pièce optique 30 en matériau optiquement transparent, servant de guide de lumière, placée derrière le cadran 20,
- une plaquette de circuit imprimé 40 qui porte différents organes électriques, tels que des composants électroniques 50, des organes moteurs 52, par exemple des logométres ou moteurs pas à pas, et des sources de lumière 60.

Plus précisément, dans les tableaux de bord classiques utilisés de nos jours, les organes moteur 52 sont placés sur l'avant du circuit imprimé 40. Les arbres de sortie 53 des organes moteur traversent la pièce optique 30 et le cadran 20. Une aiguille indicatrice 54 est fixée sur l'extrémité avant de chaque arbre 53, en regard d'une échelle de graduations formée par ou sur les premières plages translucides 22.

De plus, dans les tableaux de bord classiques, la pièce optique 30 comporte des structures 32 en saillie sur sa face arrière, lesquelles structures 32 débouchent en regard de certaines des sources de lumière 60 portées par le circuit imprimé 40, pour récupérer la lumière ainsi générée et diriger celle-ci, par effet de guide de lumière, vers les premières plages translucides 22 du cadran et vers les aiguilles 54.

Le boîtier 10 définit en outre généralement des cheminées 12 servant de guide au flux lumineux issu de certaines des sources lumineuses 60 portées par le circuit imprimé 40, vers les symboles 24 formant les secondes plages translucides.

On a décrit dans le document FR-A-2 626 536 un agencement de tableau de bord pour véhicules automobiles comprenant un caisson central présentant une face avant ouverte et agencé intérieurement pour constituer une boite à lumière diffusant vers l'avant une lumière homogène; une plaque arrière fixée sur la face arrière du caisson et supportant les composants du tableau de bord non situés en façade; une plaque avant fixée sur la face avant du caisson, transparente de manière à autoriser le passage de la lumière fournie par le caisson en direction d'un observateur et supportant les composants devant être vus d'un observateur ainsi qu'éventuellement leurs dispositifs de commande directe; une plaque de façade à transparence sélective avec des zones de couleurs diverses recouvrant la plaque avant; et des moyens de liaison notamment électriques assurant les connexions nécessaires entre les plaques arrière et avant.

Le document GB-A-2121583 décrit un dispositif d'affichage à cristaux liquides comprenant un boitier qui porte des cellules d'affichage à cristaux liquides, une pièce formée d'une plaque généralement plane en matériau optiquement transparent, placée derrière les cellules d'affichage à cristaux liquides, qui constitue une pièce optique servant de guide de lumière, une plaquette de circuit imprimé qui porte différents organes électriques sur sa face arrière et placée en position sensiblement accolée sur l'arrière de la pièce. et un réflecteur placé sur la face arrière de là pièce optique.

Le document EP-A-110063 décrit un indicateur analogique à aiguille rotative, comprenant un cadran possédant des graduations translucides, une pièce formée d'une plaque généralement plane en matériau optiquement transparent, placée sensiblement accolée derrière le cadran, qui constitue une pièce optique servant de guide de lumière, un élément réflecteur placé derrière la pièce formant guide de lumière, une plaquette de circuit imprimé placée sur l'arrière de la pièce formant guide de lumière, une aiguille disposée sur l'avant du cadran et liée à l'arbre de sortie d'un organe moteur rotatif, et au moins une source lumineuse associée à la pièce optique. Ce document préconise que entre la zone voisine de la source lumineuse du guide et l'ouverture servant de passage à l'arbre portant l'aiguille, soient prévues des fentes dont les surfaces infléchissent la lumière dans le guide, les fentes étant pour l'essentiel parallèles les unes aux autres et étant situées de part et d'autre d'un plan imaginaire qui est perpendiculaire au guide et déterminé par la source lumineuse et l'arbre d'indicateur. Le document préconise également que le réflecteur comporte des languettes qui s'engagent dans les fentes pratiquées dans le guide.

Le but de la présente invention est maintenant de perfectionner les tableaux de bord existants.

Plus précisément, un but important de la présente invention est de réduire l'encombrement en épaisseur des tableaux de bord existants tout en maintenant un éclairage satisfaisant.

Ce but est atteint, dans le cadre de la présente invention, grâce à un tableau de bord, du type défini en revendication 1 annexée, qui est délimitée sous forme de préambule et de partie caractérisante par rapport au document EP-A-0 110 063.

D'autres caractéristiques, buts et avantages de la présente invention apparaitront à la lecture de la description détaillée qui va suivre, et en regard des dessins annexés donnés à titre d'exemples non limitatifs et sur lesquels :
- la figure 1 précédemment décrite représente une vue schématique en coupe d'un tableau de bord conforme à l'état de la technique,
- la figure 2 représente une vue similaire en coupe d'un tableau de bord conforme à la présente invention,
- la figure 3 représente une vue en plan d'un cadran,
- la figure 4 représente une vue en plan d'une pièce optique,
- la figure 5 représente une vue schématique partielle en coupe d'une pièce optique conforme à la présente invention illustrant plus précisément le mode de connexion d'une cellule à cristaux liquides portée par ladite pièce optique et un circuit imprimé pilote,
- les figures 6 et 7 représentent deux variantes d'implantation d'une source lumineuse 600 sur un circuit imprimé 400,
- la figure 8 représente une autre variante d'implantation d'une source lumineuse par rapport à une pièce optique,
- les figures 9 et 10 représentent des vues en coupe longitudinale partielle de pièces optiques conformes à la présente invention,
- les figures 11 à 16 représentent diverses variantes de réalisation de moyens de régulation pour l'alimentation de sources lumineuses, dans le cadre de la présente invention,
- les figures 17a, 17b et 17c représentent trois chronogrammes illustrant le fonctionnement d'un mode de réalisation particulier de tels moyens de régulation,
- la figure 18 représente une vue partielle en coupe d'une variante de tableau de bord conforme à la présente invention, et
- les figures 19a à 19f représentent diverses variantes de réalisation de la tranche d'une fenêtre réalisée dans la pièce optique illustrée sur la figure 18.

Dans le cadre de la présente demande de brevet, les qualificatifs "avant" et "arrière" sont utilisés en référence au conducteur du véhicule. En d'autres termes, le qualificatif "avant" est utilisé pour désigner la partie des éléments du tableau de bord la plus proche du conducteur, tandis que le qualificatif "arrière" est utilisé pour désigner la partie de ces éléments la plus éloignée du conducteur.

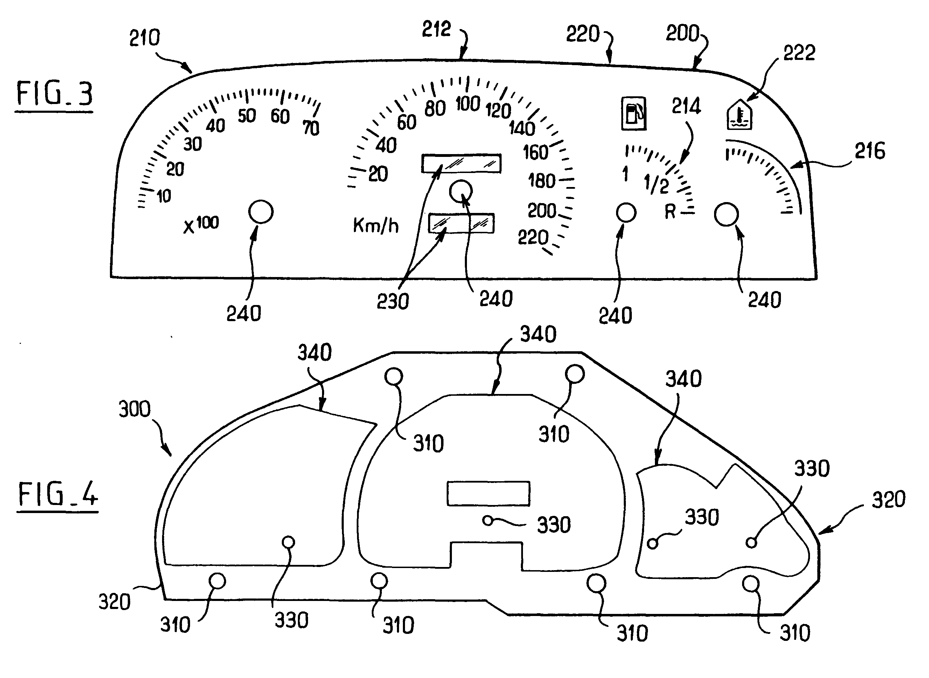

Le tableau de bord conforme à la présente invention représenté sur les figures 2 et suivantes annexées, comprend essentiellement un boitier 100, un cadran 200, une pièce optique 300 et une plaquette de circuit imprimé 400.

Le boîtier 100 représenté sur la figure 2 n'est donné qu'à titre d'illustration schématique non limitative. Un tel boîtier 100 peut bien entendu faire l'objet de nombreuses variantes de réalisation.

Généralement le boîtier 100 est formé par assemblage de différentes pièces. Le boîtier 100 est formé avantageusement par moulage de pièces en matière plastique.

On a représenté sur la figure 2, un boîtier 100 comprenant une coquille 110 ouverte sur l'avant pour recevoir le cadran 200, la pièce optique 300, et le circuit imprimé 400, et pourvu sur l'avant d'une plaque d'habillage 120. De préférence, cette plaque d'habillage 120 est réalisée en matériau opaque et a la forme générale d'un anneau épousant le contour de la coquille 110. La plaque 120 comporte une ouverture centrale 122 afin de rendre visible la partie centrale du cadran 200.

En outre, en pratique, le boîtier 100 se complète généralement d'une visière optiquement transparente. Cette visière classique en soi, n'est pas représentée sur la figure 2 annexée pour simplifier l'illustration.

On a représenté sur la figure 3, selon une vue en plan, un exemple de réalisation d'un cadran.

Le cadran 200 peut en lui-même être conforme aux modes de réalisation connus de l'homme de l'art et utilisés actuellement sur les tableaux de bord de véhicules automobiles.

Un tel cadran 200 est réalisé généralement à base d'une feuille en matière plastique transparente ou translucide, pourvue, par exemple par sérigraphie, d'un fond coloré et de diverses indications. Les indications peuvent être formées de plages translucides visibles grâce à un éclairage du cadran par l'arrière. Comme suggéré précédemment en regard de la figure 1, de telles plages translucides auxiliaires peuvent constituer soit des échelles 210, 212, 214, 216 de graduations représentant par exemple une échelle de régime moteur 210, une échelle de vitesse 212, une échelle de niveau de carburant 214 ou une échelle de température 216, comme représenté sur la figure 3, soit des symboles, le plus souvent des symboles d'alarme, tels que par exemple un symbole de pompe 220 pour visualiser une alarme de niveau de carburant ou un symbole de thermomètre 222 pour visualiser une alarme de température.

Le cadran 200 peut comporter comme représenté sur la figure 3, des fenêtres 230 pour permettre l'examen de compteurs totalisateurs kilométriques et/ou des passages 240 pour les arbres 522 d'organes moteurs 520 portés par le circuit imprimé 400.

La pièce optique 300 est réalisée en un matériau optiquement transparent. II peut s'agir par exemple et sans que ces matériaux soient limitatifs, de polycarbonate ou de polyméthacrylate de méthyle.

Selon l'invention, et il s'agit là d'une caractéristique essentielle, la pièce optique 300 est généralement plane. En d'autres termes, elle est dépourvue des structures en saillie 32 prévues dans les tableaux de bord classiques.

Toutefois, la pièce optique 300 peut, si nécessaire, être pourvue, en particulier sur sa face arrière, de structures en relief de faible hauteur, par exemple pour la fixation ou le positionnement des organes moteurs 520, comme décrit par exemple dans le document EP-A-236212.

Sur la figure 2, on a référencé respectivement 302 et 304 la face principale avant et la face principale arrière de la pièce optique 300.

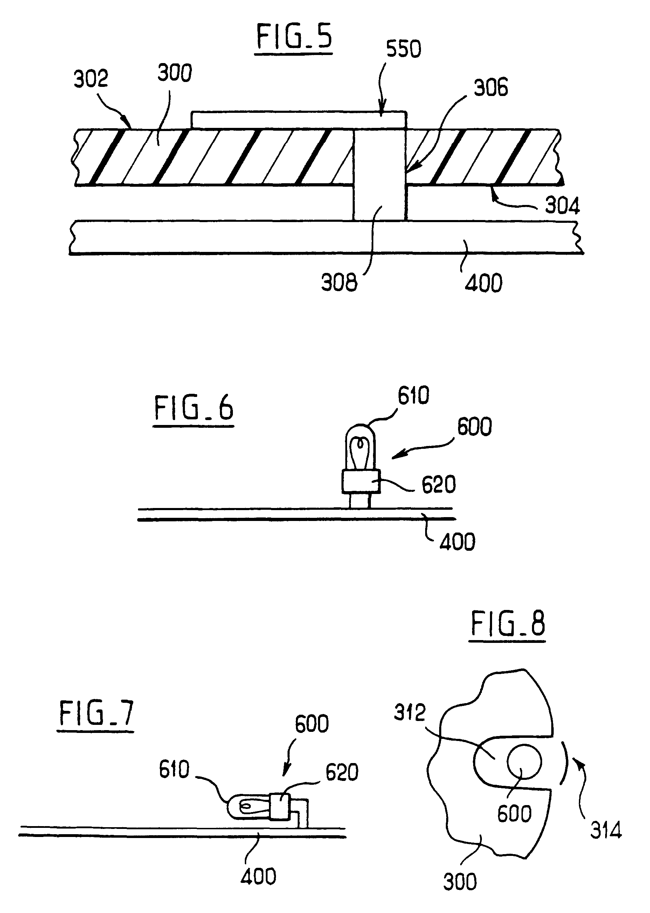

La pièce optique 300 comporte des logements 310, dans son épaisseur, pour recevoir des sources lumineuses 600. Plus précisément, les logements 310 sont adaptés pour recevoir la partie émissive 610 des sources 600, tandis que le culot 620 de celles-ci est fixé, par tout moyen approprié, sur le circuit imprimé 400. Le culot 620 des sources lumineuses 600 peut par exemple être fixé sur le circuit imprimé 400, de façon connue en soi, par un montage à baïonnette comme schématisé sur la figure 2. En variante, le culot 620 des sources lumineuses 600 peut être fixé sur le circuit imprimé 400 par soudure, comme schématisé sur les figures 6 et 7.

Dans ce dernier cas, on peut prévoir soit une disposition des sources 600 perpendiculaires au circuit imprimé 400, comme schématisé sur la figure 6, soit une disposition de ces sources 600 couchées sur le circuit imprimé 400, comme représentée sur la figure 7.

Bien entendu, le diamètre des logements 310 doit être au moins égal aux dimensions correspondantes des parties émissives 610 des sources 600.

De préférence, les logements 310 ont une section droite, considérée parallèlement aux faces principales 302, 304, cylindrique de révolution afin d'éviter toute réfraction lors de l'entrée du flux lumineux généré par les sources 600, dans la pièce optique 300.

On notera à l'examen de la figure 2, que de préférence, la pièce optique 300 est pourvue, au moins sur une partie de sa périphérie, au niveau des sources 600, d'un prisme en toit 320. Un tel prisme en toit 320 est formé plus précisément de deux facettes 322, 324 planes inclinées entre elles d'environ 90° et inclinées respectivement d'environ 45° par rapport aux faces principales 302,304 de la pièce optique 300. Ces facettes 322, 324 forment un dièdre convexe vers l'extérieur. Elles se raccordent respectivement à la face principale avant 302, et à la face principale arrière 304 de la pièce optique 300.

L'homme de l'art comprendra aisément qu'un tel prisme en toit 320 a pour fonction de renvoyer vers l'intérieur de la pièce optique 300 le flux lumineux issu des sources 600 et parvenant sur la périphérie de la pièce 300.

Bien entendu, en variante, le prisme en toit 320 pourrait être remplacé par une tranche plane orthogo'nale aux faces principales 302, 304, pourvue d'un revêtement réflecteur. Toutefois, l'utilisation d'un prisme en toit 320 est considérée comme préférentielle par rapport à l'emploi d'un tel revêtement réflecteur, puisqu'il permet de réaliser le réflecteur, lors du moulage de la pièce optique 300, sans exiger d'opération ultérieure à cet effet.

Selon une autre variante, on peut obtenir une tranche de pièce optique 300 réfléchissante, pour renvoyer vers l'intérieur les rayons lumineux qui parviennent sur cette tranche, en plaçant sur celle-ci un réseau de catadioptres en forme de tétraèdres ou coins de cube. On sait que de tels catadioptres ont pour fonction de renvoyer tout rayon incident dans une direction parallèle à la direction d'incidence.

Par ailleurs, comme on le voit notamment sur la figure 4, le contour de la pièce optique 300, au moins au niveau des zones pourvues de moyens réfléchissants (prisme en toit 320, revêtement réflecteur ou catadioptres), peut être adapté pour favoriser le renvoi de la lumière vers les zones d'exploitation souhaitées, soit en particulier les aiguilles portées par les organes moteurs 520 ou les plages translucides 210, 212, 214, 216, 220 et 222 du cadran 200. A cet effet, la pièce optique 300 peut présenter, au moins localement, un contour de type conique, par exemple elliptique, parabolique ou hyperbolique, convexe ou concave, en contrôlant par ailleurs, la position des sources lumineuses 600 par rapport au foyer de ces contours.

La pièce optique 300 comprend également des passages traversants 330 pour les arbres 522 des organes moteurs 520. Bien entendu, les passages traversants 330 doivent être respectivement alignés avec les passages 240 formés dans le cadran 200.

La plaquette de circuit imprimé 400 peut être réalisée selon toute technologie connue de l'homme de l'art. Selon l'invention, la plaquette de circuit imprimé 400 est sensiblement accolée sur la face arrière 304 de la pièce optique 300.

En outre, alors que dans les tableaux de bord classiques, le circuit imprimé 40 constitue une pièce accessoire ajoutée dans le boîtier support 10, dans le cadre de la présente invention, le circuit imprimé 400 joue un rôle primordial et sert de support à l'ensemble des moyens électriques, en particulier les composants électriques 500 nécessaires à la mise en forme des signaux appliqués aux divers dispositifs indicateurs, les sources lumineuses 600 et les organes moteurs 520.

De préférence, le circuit imprimé 400 est également pourvu directement dès connecteurs électriques nécessaires.

Les organes moteurs 520 peuvent être formés de tous moyens appropriés connus, par exemple de logomètres, de moteurs pas à pas, de galvanomètres, ou d'appareils thermiques notamment à bilame.

Selon l'invention, les organes moteurs 520 sont fixés non plus sur la face avant du circuit imprimé 40 comme cela était connu jusqu'ici et comme représenté sur la figure 1, mais au contraire sur la face arrière du circuit imprimé 400.

Grâce à cette disposition, comme on le comprend bien à l'examen comparé des figures 1 et 2, les culots 620 des lampes 600'fixées par un montage à baïonnette sur le circuit imprimé 400, ne rajoutent pas à l'encombrement en épaisseur du tableau de bord, mais s'insèrent dans l'épaisseur des organes moteurs 520. Il en va de même pour les connecteurs.

En pratique, on peut prévoir de fixer l'intégralité des composants électriques, à l'exception des sources 600 à montage à baïonnette, sur le circuit imprimé 400, grâce à toute technique de soudure connue de l'homme de l'art, telle qu'en particulier soudure à la vague.

Selon une caractéristique importante de l'invention, la pièce optique 300 est en outre munie, sur sa face arrière 304, d'un élément réflecteur/diffuseur.

Le réflecteur/diffuseur est formé d'une couche de peinture de couleur blanche, déposée directement sur la face arrière 304 de la pièce optique 300.

Le réflecteur/diffuseur est constitué d'une couche de peinture blanche sur la totalité de la surface de la pièce optique 300, pour permettre d'éclairer la totalité de la surface du cadran 200. Cette disposition s'avére particulièrement avantageuse, parceque l'intégralité du cadran 200 ou en tout cas la majeure partie de sa surface est constituée d'une plage translucide colorée. En effet, l'alimentation des sources lumineuses 600 permet, grâce au réflecteur/diffuseur ainsi formé sur la face arrière 304 de la pièce optique 300 d'obtenir un fond coloré continu lumineux sur le cadran 200.

Pour permettre un éclairage homogène des plages translucides sur le cadran 200, de préférence les sources lumineuses 600 sont placées sous la plaque d'habillage 120. A cet effet, les logements 310 de réception sont prévus sur la périphérie de la pièce optique 300. De ce fait, les sources lumineuses 600 ne sont pas directement visibles pour le conducteur.

Il est à noter que le flux lumineux issu des sources 600 parvient au conducteur après renvoi et diffusion par le réflecteur/diffuseur prévu sur la face arrière de la pièce optique 300 et traversée des plages translucides du cadran 200. Cette disposition entraîne un effet d'intégration qui permet d'atténuer les zones de concentration du flux lumineux et conduit à une bonne homogénéité de l'éclairage.

Le réflecteur/diffuseur précité prévu sur la face arrière 304 de la pièce optique 300 peut être utilisé pour éclairer les plages translucides du cadran 200. Un tel réflecteur/diffuseur, peut également être utilisé pour éclairer les aiguilles 524 portées par les arbres 522 des moyens d'entraînement 520.

L'éclairage des aiguilles 524 peut être opéré, de façon connue en soi, par des structures à effet de prisme formées dans la pièce optique 300, notamment sous forme de cônes de révolution ou de facettes planes inclinés à environ 45° des faces principales 302, 304, dans l'épaisseur de la pièce optique 300, en regard des moyeux des aiguilles 524.

De même, en fonction de la nature des appareils indicateurs utilisés sur le tableau et/ou de la géométrie de celui-ci, on peut prévoir de placer des hologrammes adéquats sur une face principale quelconque 302 ou 304 de la pièce optique 300, ou dans l'épaisseur de celle-ci, le cas échéant en étant inclinés sur lesdites faces principales 302,304, en regard des plages translucides et/ou en regard des aiguilles 524, voire le cas échéant sur la tranche de la pièce optique 300, à la place du prisme en toit 320, ou encore dans les logements 310.

Le tableau de bord conforme à la présente invention peut comprendre également des dispositifs indicateurs à cristaux liquides.

Dans ce cas, comme représenté schématiquement sur la figure 5, l'afficheur à cristaux liquides 550 est avantageusement supporté par la face avant 302 de la pièce optique 300. Par ailleurs, cette pièce optique 300 est pourvue d'une fenêtre traversante 306. Cette fenêtre 306 est conçue pour recevoir un dispositif d'interconnexion élastique 308 entre les plages conductrices de la cellule à cristaux liquides 550 et le circuit imprimé 400 placé sur la face arrière 304 de la pièce optique 300. De tels dispositifs d'interconnexion 308 à structure élastique sont bien connus de l'homme de l'art. De tels dispositifs sont commercialisés en particulier sous la dénomination "ZEBRA". De tels dispositifs d'interconnexion sont formés généralement d'un empilement de couches de matériaux élastiques à propriété alternativement électriquement conductrices et électriquement isolantes.

Bien entendu, pour autoriser une interconnexion fiable entre la cellule à cristaux liquides 550 et le circuit imprimé 400, l'épaisseur du dispositif d'interconnexion 308 doit être supérieure à l'épaisseur de la pièce optique 300.

De préférence, la cellule à cristaux liquides 550 est formée d'un dispositif d'affichage souple de type PDLC (Polymer Dispersed Liquid Crystal) ou PNLC (Polymer Network Liquid Crystal). De tels imageurs souples à cristaux liquides sont bien connus de l'homme de l'art.

Les afficheurs souples à cristaux liquides connus de l'homme de l'art ne seront pas décrits dans le détail par la suite. On rappellera simplement qu'ils se caractérisent essentiellement par l'utilisation de membranes extérieures en polyester à la place des plaques de verre classiques d'une part, et l'incorporation de billes de cristaux liquides dans un film polymère d'autre part.

Les dispositifs afficheurs souples à cristaux liquides offrent, entre autres, l'avantage de pouvoir être facilement conçus avec une ouverture de forme quelconque et d'être, d'autre part aisément pliés pour faciliter la connectique du dispositif.

Le tableau de bord, conforme à la présente invention, décrit précédemment, offre en particulier, par rapport aux tableaux de bord de l'état de la technique, les avantages suivants :

Comme on l'a indiqué précédemment, le tableau de bord conforme à la présente invention présente un encombrement réduit en épaisseur.

En outre, le tableau de bord conforme à la présente invention présente un rendement optique amélioré. Par conséquent, il permet l'utilisation d'un nombre de sources lumineuses inférieur aux tableaux de bord classiques, un échauffement moindre et une consommation électrique plus faible.

Le tableau de bord conforme à la présente invention autorise la réalisation d'un cadran 300 présentant un fond éclairé continu homogène.

En particulier, les sources lumineuses 600 à montage à baïonnette sur le circuit imprimé 400, représentées sur la figure 2, pourront être remplacées aisément par d'autres sources lumineuses à fixation par soudure, telles que par exemple des diodes électroluminescentes du type CMS, comme on l'a représenté sous la référence 630 au niveau de cheminées 130 en regard de plages translucides définissant des symboles formés dans le cadran 200, sur la périphérie de celui-ci.

Par ailleurs de préférence les sources 600 placées dans des logements complémentaires 310 de la pièce optique 300 ne sont pas placées en regard du cadran 200, mais au niveau de zones du tableau de bord dépourvues de ce cadran, pour éviter de chauffer celles-ci. Il suffit pour cela de prévoir par exemple des découpes adéquates dans le contour du cadran 200, au niveau des sources 600.

En outre la pièce optique 300 conforme à la présente invention peut être utilisée pour éclairer d'autres éléments que des aiguilles ou des plages translucides d'un cadran, tels que par exemple des touches d'un clavier, notamment des touches de clavier comportant une membrane silicone, intégré dans le tableau de bord, ou encore tout organe pouvant nécessiter'un éclairage et intégrable dans un tableau de bord.

De plus comme représenté sur la figure 8, on peut prévoir de placer certaines au moins des sources lumineuses 600 non pas dans des logements 310 entourant celles-ci sur 360°, mais dans des logements 312 débouchant sur la tranche de la pièce optique 300, voire sur l'extérieur de cette pièce optique 300. Dans ces différents cas les sources lumineuses 600 restent placer dans l'épaisseur de la pièce optique 300. Cette disposition permet de limiter l'échauffement de la pièce optique 300. II est également avantageux dans ce cas d'associer la source lumineuse 600 à un réflecteur 314.

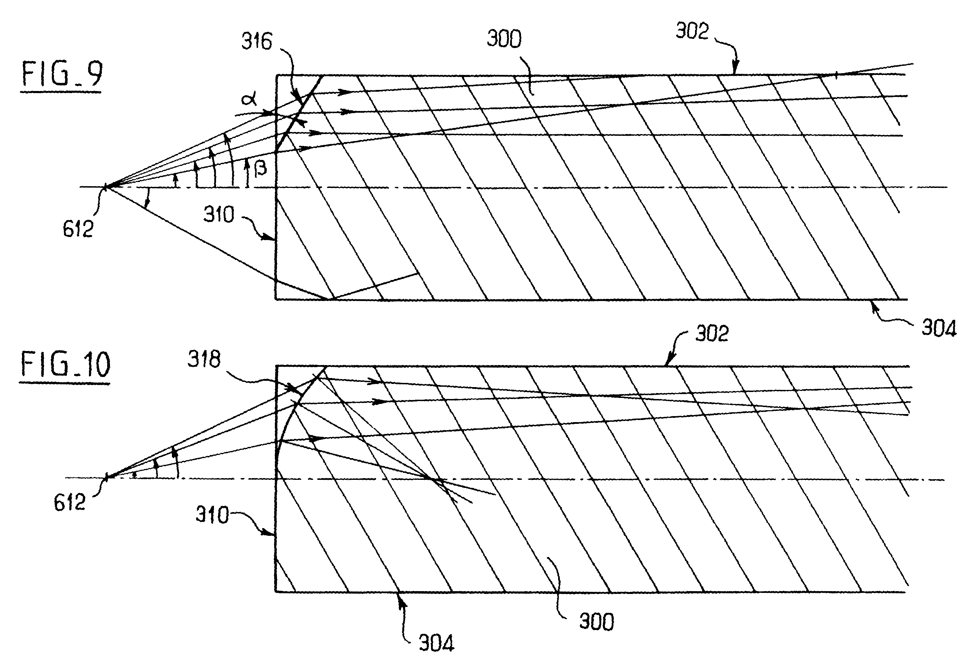

On va maintenant décrire en regard des figures 9 et 10 des perfectionnements permettant d'améliorer l'homogénéité de l'éclairage du tableau de bord conforme à la présente invention.

Comme on l'a indiqué précédemment, dans le cadre de la présente invention, les sources lumineuses 610 sont de préférence placées dans des logements 310 de la pièce optique 300. La lumière émise par les sources 610 est ensuite guidée à l'intérieur de la pièce 300 et diffusée vers la face avant de celle-ci par l'élément réflecteur/diffuseur 340.

De préférence le foyer 612 des sources lumineuses 610 est situé à mi-épaisseur de la pièce optique 300.

D'une façon générale cette disposition donne pleinement satisfaction.

Cependant dans certaines configurations on observe néanmoins une luminosité plus importante dans les zones proches des sources lumineuses 610.

Pour éviter ces sur-luminosités, il est proposé dans le cadre de la présente invention de former dans la pièce 300, et dans la partie avant de celle-ci, une pente ou une courbure au niveau des logements 310 recevant les sources 610.

Ces pentes ou courbures sont conçues pour dévier les rayons issus des sources 610 de sorte que ces rayons ne viennent pas éclairer directement la zone proche des logements 310.

Comme on le voit sur les figures 9 et 10, ces pentes ou courbures sont de préférence limitées à la demi-épaisseur avant de la pièce optique 300, car les rayons qui pénètrent au contraire dans la demi-épaisseur arrière de cette pièce optique en sortie des sources 610, n'atteignent pas directement la face avant 302 de la pièce optique 300, mais subissent une réflexion avant de parvenir sur cette face avant 302 et par conséquent contribuent moins à la sur-luminosité.

II est toutefois envisageable de donner une pente ou courbure en partie arrière des logements 310 recevant les sources 610 si l'on veut également favoriser l'éclairage d'une zone plus éloignée des sources 610 , ou atténuer la luminosité sur une zone plus étendue autour du logement de la source.

On a représenté sur la figure 9, une variante de réalisation en forme de pente 316. Plus précisément cette pente 316 a la forme d'un cone centré sur l'axe d'un logement 310 et évasé en direction de la face avant 302 de la pièce optique 300.

A titre d'exemple non limitatif, pour un logement 310 de diamètre 9mm, et une pièce optique 300 d'une épaisseur de 6mm, si l'on veut atténuer l'éclairage dans une zone autour de chaque logement 310 représentant une couronne de 15mm de large, on peut réaliser un cône 316 d'angle α de l'ordre de 30° sur les 2mm avant de la pièce optique 300.

Une telle pente 316 permet de dévier tous les rayons issus du foyer 612 qui parviennent sur la pièce optique 300 avec une incidence β supérieure à 12°. Ces rayons sont ainsi déviés au delà de la couronne précitée. En revanche les rayons qui parviennent sur la pièce optique 300 avec une incidence β supérieure à 12° parviennent automatiquement directement ou indirectement au delà de cette couronne.

On a représenté sur la figure 10, une autre variante de réalisation en forme de courbure 318. Plus précisément cette courbure 318 a la forme d'une calotte torique convexe, centrée sur l'axe d'un logement 310 et évasé en direction de la face avant 302 de la pièce optique 300.

A titre d'exemple non limitatif, pour un logement 310 de diamètre 9mm, et une pièce optique 300 d'une épaisseur de 6mm, si l'on veut atténuer l'éclairage dans une zone autour de chaque logement 310 représentant une couronne de 15mm de large, on peut réaliser une courbure torique 318 de rayon intérieur de l'ordre de 4mm.

Bien entendu le choix de l'angle de la pente 316 ou du rayon de courbure 318 dépend de la localisation du foyer 612 de chaque source 610 et des zones que l'on veut atténuer.

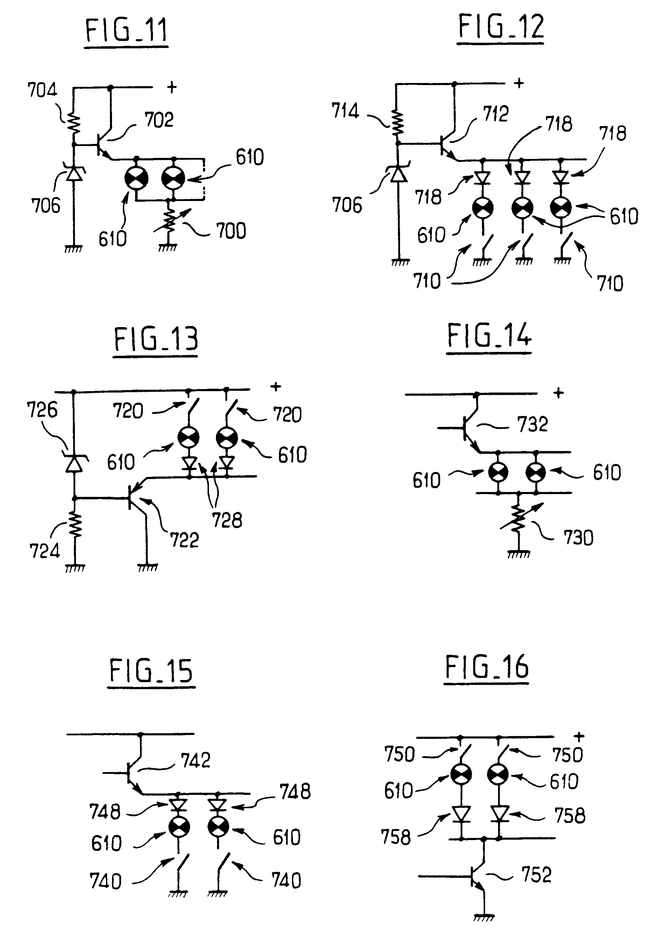

On va maintenant décrire en regard des figures 11 à 17 diverses variantes de moyens conçus pour réguler la tension d'alimentation des sources d'éclairage et des lampes de témoin 610. Une telle régulation a pour but de limiter l'échauffement du à ces sources et lampes et de conserver un éclairage constant quelle que soit la tension d'alimentation. Cette disposition permet également d'améliorer la durée de vie des lampes 610.

Cette régulation peut être assurée en courant continu ou en courant haché.

Les figures 11 à 13 concernent des variantes à régulation en courant continu.

On distingue sur la figure 11 plusieurs lampes d'éclairage 610 connectées en parallèle. Ces lampes 610 sont reliées à la masse par l'intermédiaire d'un rhéostat de réglage de luminosité 700. Par ailleurs ces lampes 610 sont reliées a une borne d'alimentation positive par l'intermédiaire du trajet de conduction principal émetteur-collecteur d'un transistor NPN 702. Ce transistor 702 a sa base polarisée par une résistance 704 reliée par ailleurs à la borne d'alimentation positive précitée. Le potentiel d'alimentation des lampes 610 est fixé par une diode Zener 706 reliée entre la base du transistor 702 et la masse, cathode côté base du transistor 702.

On distingue sur la figure 12 plusieurs témoins 610. Ces lampes 610 sont reliées à la masse par l'intermédiaire d'interrupteurs de commande respectifs 710. Par ailleurs ces lampes 610 sont reliées à une borne d'alimentation positive par l'intermédiaire du trajet de conduction principal émetteur-collecteur d'un transistor NPN 712. Ce transistor 712 a sa base polarisée par une résistance 714 reliée par ailleurs à la borne d'alimentation positive précitée. Le potentiel d'alimentation des lampes 610 est fixé par une diode Zener 716 reliée entre la base du transistor 712 et la masse, cathode côté base du transistor 712. De plus de préférence les lampes-témoin 610 sont reliées à l'émetteur du transistor 712 par l'intermédiaire de diodes 718 respectives. Ces diodes 718 sont nécessaires lorsqu'il est prévu des charges additionnelles en parallèle des lampes-témoins 610. Dans le cas contraire les diodes 718 peuvent être omises.

On distingue sur la figure 13 plusieurs témoins 610. Ces lampes 610 sont reliées à une borne d'alimentation positive par l'intermédiaire d'interrupteurs de commande respectifs 720. Par ailleurs ces lampes 610 sont reliées à la masse par l'intermédiaire du trajet de conduction principal émetteur-collecteur d'un transistor PNP 722. Ce transistor 722 a sa base polarisée par une résistance 724 reliée par ailleurs à la masse. Le potentiel d'alimentation des lampes 610 est fixé par une diode Zener 726 reliée entre la base du transistor 722 et la borne d'alimentation positive, anode côté base du transistor 722. De plus de préférence les lampes-témoin 610 sont reliées à l'émetteur du transistor 722 par l'intermédiaire de diodes 728 respectives. Ces diodes 728 sont nécessaires lorsqu'il est prévu des charges additionnelles en parallèle des lampes-témoins 610. Dans le cas contraire les diodes 728 peuvent être omises.

On distingue sur la figure 14 plusieurs lampes d'éclairage 610 connectées en parallèle. Ces lampes 610 sont reliées à la masse par l'intermédiaire d'un rhéostat de réglage de luminosité 730. Par ailleurs ces lampes 610 sont reliées à une borne d'alimentation positive par l'intermédiaire du trajet de conduction principal émetteur-collecteur d'un transistor NPN 732 alimenté sur sa base par un signal de commande haché.

On distingue sur la figure 15 plusieurs témoins 610. Ces lampes 610 sont reliées à la masse par l'intermédiaire d'interrupteurs de commande respectifs 740. Par ailleurs ces lampes 610 sont reliées à une borne d'alimentation positive par l'intermédiaire du trajet de conduction principal émetteur-collecteur d'un transistor NPN 742. Ce transistor 742 est alimenté sur sa base par un signal de commande haché, par exemple carré, dont le rapport cyclique est adapté pour définir une tension d'alimentation adéquate sur les lampes 610. De plus de préférence les lampes-témoin 610 sont reliées à l'émetteur du transistor 742 par l'intermédiaire de diodes 748 respectives. Ces diodes 748 sont nécessaires lorsqu'il est prévu des charges additionnelles en parallèle des lampes-témoins 610. Dans le cas contraire les diodes 748 peuvent être omises.

On distingue sur la figure 16 plusieurs témoins 610. Ces lampes 610 sont reliées à une borne d'alimentation positive par l'intermédiaire d'interrupteurs de commande respectifs 750. Par ailleurs ces lampes 610 sont reliées à la masse par l'intermédiaire du trajet de conduction principal émetteur-collecteur d'un transistor PNP 752. Ce transistor 752 est alimenté sur sa base par un signal de commande haché, par exemple carré, dont le rapport cyclique est adapté pour définir une tension d'alimentation adéquate sur les lampes 610. De plus de préférence les lampes-témoin 610 sont reliées au collecteur du transistor 752 par l'intermédiaire de diodes 758 respectives. Ces diodes 758 sont nécessaires lorsqu'il est prévu des charges additionnelles en parallèle des lampes-témoins 610. Dans le cas contraire les diodes 758 peuvent être omises.

Le signal de commande appliqué sur la base des transistors 732, 742 ou 752 peut posséder un rapport cyclique variable, commandé par tous moyens appropriés, pour régler la tension d'alimentation effective des lampes 610, en dessous du seuil de limitation imposé, à une fréquence de répétition suffisamment élevée, par exemple supérieure à 100Hz, pour éviter un papillotement.

Plus précisément ce rapport cyclique est réglé pour être égal au rapport (Ueff recherchée/Ualim)2, relation dans laquelle Ueff représente la tension efficace recherchée aux bornes des lampes, tandis que Ualim représente la tension d'alimentation disponible sur la batterie du véhicule.

Bien entendu lorsque la tension Ualim est inférieure à la tension Ueff recherchée, les lampes sont alimentées sous Ualim en continu (rapport cyclique de 1).

Cette disposition permet de supprimer le potentiomètre de puissance utilisé classiquement de nos jours sur les véhicules automobiles.

Plus précisément un tel potentiomètre peut être remplacé par exemple par un simple bouton poussoir associé à un circuit électronique classique pour déclencher soit une augmentation, soit une réduction du rapport cyclique du signal de commande.

On peut par exemple prévoir une électronique associée à un bouton de commande bistable adaptée de sorte que deux appuis successifs brefs commandent respectivement l'allumage et l'extinction des lampes 610, tandis qu'un appui prolongé fait croître, respectivement décroître le rapport cyclique donc la tension efficace d'alimentation à partir de la dernière valeur de commande avantageusement mémorisée.

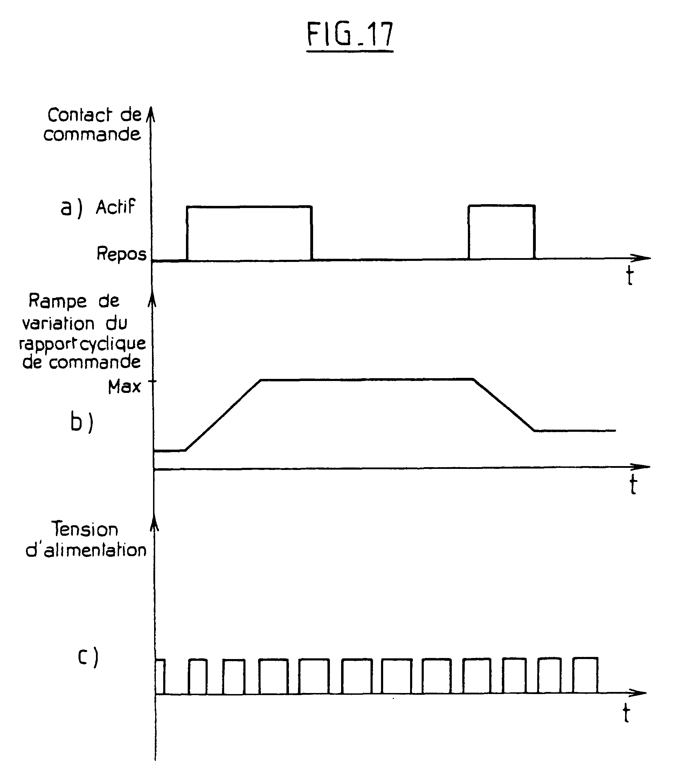

Plus précisément comme on l'a schématisé sur la figure 17 un tel bouton poussoir peut déclencher (lorsqu'il est activé comme celà est illustré sur la figure 17a), une rampe à double pente respectivement croissante et décroissante entre deux valeurs seuils (illustrée sur la figure 17b) définissant la variation dans le temps du rapport cyclique du signal de commande (illustré sur la figure 17c).

A titre d'exemple non limitatif, la pente croissante du signal de la figure 17b peut commander une croissance du rapport cyclique, tandis que la pente décroissante du signal de la figure 17b commande une décroissance de ce rapport cyclique.

Le bouton poussoir de commande peut être placé en tout lieu approprié, par exemple sur la manette de commande des moyens d'éclairage et des indicateurs lumineux. Il peut par ailleurs être formé de tout capteur approprié, tel que par exemple d'un contact mécanique ou encore et de façon limitative d'un capteur optique ou capacitif.

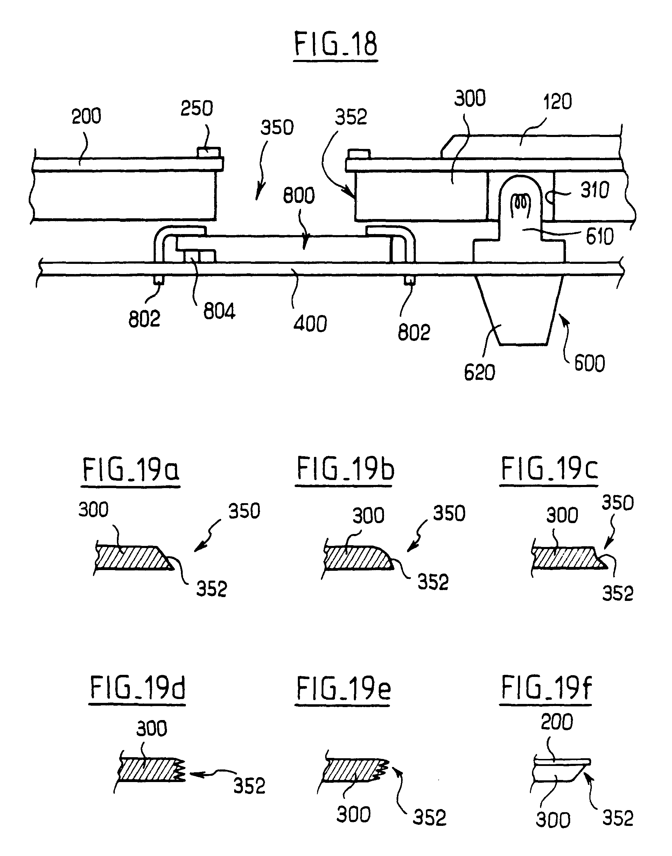

On va maintenant décrire la variante de réalisation représentée sur la figure 18.

On retrouve sur cette figure 18 un cadran 200, une pièce optique 300, un circuit imprimé 400, une source lumineuse 610 portée par ce circuit 400 et dont la partie active est placée dans un logement 310 de la pièce optique 300, une plaque d'habillage 120 placée devant le cadran 200 en regard de la source 610.

En outre selon la figure 18, il est prévu un afficheur à cristaux liquides 800 sur la face avant du circuit imprimé 400, c'est à dire entre ce circuit 400 et la face arrière de la pièce optique 300.

Cet afficheur 800 est fixé sur le circuit imprimé 400 par tout moyen approprié. Ces moyens sont schématisés sous la référence 802 sur la figure 18. Par ailleurs l'afficheur 800 est alimenté par le circuit imprimé 400 par l'intermédiaire de tous moyens électriquement conducteurs appropriés, tels que un ensemble 804 formé par un empilement de couches alternées de matériau polymère alternativement électriquement conductrices et électriquement isolantes, connu généralement sous la dénomination "Zébra".

Cet afficheur 800 est placé en regard d'une fenêtre 350 formée dans la pièce optique 300. La fenêtre 350 est de préférence de même configuration que l'afficheur 800, c'est à dire généralement de contour rectangulaire. Cependant la fenêtre 350 possède des dimensions inférieures à celles de l'afficheur 800.

L'afficheur 800 est au moins sensiblement centré sur la fenêtre 350.

De préférence le cadran 200 s'étend au delà de la fenêtre 350 formée dans la pièce optique 300, pour cacher au moins partiellement les flancs 352 de la fenêtre 350 comme on le voit sur la figure 18.

Par ailleurs de préférence le cadran 200 est muni sur sa face avant et autour de la fenêtre 350, d'un liseret 250 en matériau opaque qui permet de cacher le pourtour de l'afficheur 800.

L'une au moins des faces de la tranche 352 de la fenêtre 350 est adaptée pour diriger au moins une partie du faisceau optique guidée dans la pièce 300 vers l'afficheur 800. Les quatres faces de cette fenêtre 350 peuvent être adaptées pour cet éclairage de l'afficheur 800, ou encore une seule face de la fenêtre 350 peut être adaptée à cet effet, les autres faces étant obturées optiquement de préférence pour éviter une fuite de lumière à ce niveau.

L'afficheur 800 peut être réflectif ou transflectif, de préférence positif (c'est-à-dire caractères foncés sur fond clair) bien qu'il puisse être également négatif (c'est-à-dire caractères clairs sur fond foncé).

Le cas échéant la pièce optique 300 peut être munie d'un fond coloré sur la majeure partie de sa surface arrière. Dans ce cas, le bord et la fixation de l'afficheur 800 sont recouverts par ce fond coloré. Le liseret 250 peut donc être de faible dimension.

En variante le liseret 250 peut d'ailleurs être remplacé par un réhaut d'habillage entourant la fenêtre 350, sur la face avant du cadran 200.

La face active de la fenêtre 350 peut faire l'objet de nombreuses variantes de réalisation.

Par exemple comme représenté sur la figure 19a, cette face active 352 peut être droite, oblique par rapport aux faces principales de la pièce 300.

Selon d'autres variantes cette face 352 peut être oblique courbée convexe comme représenté sur la figure 19b, oblique courbée concave comme représenté sur la figure 19c, droite et équipée de lentilles de Fresnel comme représenté sur la figure 19d, oblique et équipée de lentilles de Fresnel comme représenté sur la figure 19e, munie d'une surface diffusante comme illustré sur la figure 19f ou encore munie d'une optique diffractive.

## Revendications

1. Tableau de bord pour véhicules automobiles délivrant au moins une information analogique par aiguille rotative, comprenant :
. un boîtier (100) qui porte,
. un indicateur constitué d'un cadran (200) formé d'une feuille en matière plastique comportant d'une part un fond coloré, d'autre part diverses indications sous forme de plages translucides (210, 212, 214, 216, 220, 222),
. une pièce (300) formée d'une plaque plane en matériau optiquement transparent, placée derrière le cadran, qui constitue une pièce optique (300) servant de guide de lumière, et comporte sur sa face arrière un élément réflecteur/diffuseur (340),
. une plaquette de circuit imprimé (400) placée sur l'arrière de la pièce (300) formant guide de lumière, laquelle plaquette porte différents organes électriques comportant au moins un organe moteur rotatif (520), portant par son arbre de sortie, une aiguille (524) disposée sur l'avant du cadran (200) et des sources lumineuses (600) associées à la pièce optique (300),
caractérisé par le fait que
. la plaquette de circuit imprimé (400) est placée en position sensiblement accolée sur l'arrière de la pièce (300), la plaquette de circuit imprimé (400) étant accolée sur la face arrière de l'élément réflecteur/diffuseur (340) lui-même adjacent à la face arrière de la pièce (300) formant guide de lumière, et
. les organes électriques (520) sont portés par la face arrière de la plaquette de circuit imprimé (400),
. l'élément réflecteur diffuseur (340) est constitué d'une arrière couche de peinture blanche sur la totalité de la surface arrière de la pièce optique (300) et le fond coloré du cadran (200) est constitué d'une plage translucide colorée principale de telle sorte que l'alimentation des sources lumineuses (600) permet d'obtenir un fond coloré continu lumineux sur le cadran (200).

2. Tableau de bord selon la revendication 1, caractérisé par le fait que les sources lumineuses (600) sont placées dans des logements (310) formés dans l'épaisseur de la pièce optique (300).

3. Tableau de bord selon l'une des revendications 1 ou 2, caractérisé par le fait que la pièce optique (300) comprend, sur une partie au moins de sa périphérie, un prisme en toit (320) formé de deux facettes (322, 324) inclinées d'environ 45° par rapport aux faces principales 1302, 304) de la pièce optique.

4. Tableau de bord selon l'une des revendications 1 ou 2, caractérisé par le fait que la pièce optique (300) est pourvue, sur une partie au moins de sa tranche, d'un revêtement réflecteur ou d'un système catadioptrique.

5. Tableau de bord selon l'une des revendications 3 ou 4, caractérisé par le fait qu'une partie au moins du contour de la pièce optique (300) est de type conique, par exemple elliptique, parabolique ou hyperbolique, convexe ou concave.

6. Tableau de bord selon l'une des revendications 1 à 5, caractérisé par le fait qu'au moins la majorité des organes électriques (500, 520) sont fixés sur le circuit imprimé (400) par soudure à la vague.

7. Tableau de bord selon l'une des revendications 1 à 6, caractérisé par le fait que les sources de lumière (600) sont essentiellement monochromatiques, de préférence de type diodes électroluminescentes.

8. Tableau de bord selon l'une des revendications 1 à 7, caractérisé par le fait que les sources de lumière (600) sont placées sur la périphérie de la pièce optique (300) et recouvertes par un élément (120) du boîtier (100).

9. Tableau de bord selon l'une des revendications 1 à 8, caractérisé par le fait qu'il comprend un afficheur à cristaux liquides.

10. Tableau de bord selon l'une des revendications 1 à 9, caractérisé par le fait qu'il comprend un afficheur souple à cristaux liquides.

11. Tableau de bord selon l'une des revendications 9 ou 10, caractérisé par le fait que l'afficheur à cristaux liquides est alimenté par l'intermédiaire d'un dispositif d'interconnexion multipistes placé dans une fenêtre complémentaire ménagée dans la pièce optique (300) et formée d'un empilement de couches en matériaux élastiques alternativement à propriétés électriquement conductrices et électriquement isolantes.

12. Tableau de bord selon l'une des revendications 1 à 11, caractérisé par le fait que les sources lumineuses (610) sont placées dans des logements (310) de la pièce optique (300) et ces logements (310) sont munis dans la partie avant de la pièce optique (300) d'une pente (316) ou d'une courbure (318).

13. Tableau de bord selon la revendication 12, caractérisé par le fait que le foyer (612) des sources lumineuses (610) est situé dans l'épaisseur de la pièce optique (300).

14. Tableau de bord selon l'une des revendications 12 ou 13, caractérisé par le fait que les pentes (316) ou courbures (318) sont conçues pour dévier les rayons issus des sources (610) de sorte que ces rayons ne viennent pas éclairer directement la zone proche des logements (310).

15. Tableau de bord selon l'une des revendications 12 à 14, caractérisé par le fait que les pentes (316) ou courbures (318) sont limitées à la demi-épaisseur avant de la pièce optique (300).

16. Tableau de bord selon l'une des revendications 12 à 15, caractérisé par le fait que la pente (316) a la forme d'un cône centré sur l'axe d'un logement (310) et évasé en direction de la face avant (302) de la pièce optique (300).

17. Tableau de bord selon l'une des revendications 12 à 16, caractérisé par le fait que pour un logement (310) de diamètre 9mm, et une pièce optique (300) d'une épaisseur de 6mm, la pente (316) a la forme d'un cône d'angle α de l'ordre de 30° sur les 2mm avant de la pièce optique (300).

18. Tableau de bord selon l'une des revendications 12 à 15, caractérisé par le fait que la courbure (318) a la forme d'une calotte torique convexe, centrée sur l'axe d'un logement (310) et évasé en direction de la face avant (302) de la pièce optique (300).

19. Tableau de bord selon l'une des revendications 12 à 15 ou 18, caractérisé par le fait que pour un logement (310) de diamètre 9mm, et une pièce optique (300) d'une épaisseur de 6mm, la courbure est formée d'une surface torique (318) de rayon intérieur de l'ordre de 4mm.

20. Tableau de bord selon l'une des revendications 1 à 19, caractérisé par le fait qu'il comprend des moyens conçus pour réguler la tension d'alimentation des sources d'éclairage et des lampes de témoin (610).

21. Tableau de bord selon la revendication 20, caractérisé par le fait que la régulation est assurée en courant continu ou en courant haché.

22. Tableau de bord selon l'une des revendications 1 à 21, caractérisé par le fait qu'il comprend plusieurs lampes d'éclairage (610) reliées à la masse par l'intermédiaire d'un rhéostat de réglage de luminosité (700) et reliées à une borne d'alimentation positive par l'intermédiaire du trajet de conduction principal émetteur-collecteur d'un transistor NPN (702), ce transistor (702) ayant sa base polarisée par une résistance (704) reliée par ailleurs à la borne d'alimentation positive précitée et le potentiel d'alimentation des lampes (610) étant fixé par une diode Zener (706) reliée entre la base du transistor (702) et la masse.

23. Tableau de bord selon l'une des revendications 1 à 22, caractérisé par le fait qu'il comprend plusieurs témoins (610) reliés à la masse par l'intermédiaire d'interrupteurs de commande respectifs (710) et reliés à une borne d'alimentation positive par l'intermédiaire du trajet de conduction principal émetteur-collecteur d'un transistor NPN (712), ce transistor (712) ayant sa base polarisée par une résistance (714) reliée par ailleurs à la borne d'alimentation positive précitée, le potentiel d'alimentation des lampes (610) étant fixé par une diode Zener (716) reliée entre la base du transistor (712) et la masse, cathode côté base du transistor (712) et de préférence les lampes-témoin (610) étant reliées à l'émetteur du transistor (712) par l'intermédiaire de diodes (718) respectives.

24. Tableau de bord selon l'une des revendications 1 à 23, caractérisé par le fait qu'il comprend plusieurs témoins (610) reliés à une borne d'alimentation positive par l'intermédiaire d'interrupteurs de commande respectifs (720) et reliés à la masse par l'intermédiaire du trajet de conduction principal émetteur-collecteur d'un transistor PNP (722), ce transistor (722) ayant sa base polarisée par une résistance (724) reliée par ailleurs à la masse, le potentiel d'alimentation des lampes (610) étant fixé par une diode Zener (726) reliée entre la base du transistor (722) et la borne d'alimentation positive, et les lampes-témoin (610) étant de préférence reliées à l'émetteur du transistor (722) par l'intermédiaire de diodes (728) respectives.

25. Tableau de bord selon l'une des revendications 1 à 24, caractérisé par le fait qu'il comprend plusieurs lampes d'éclairage (610) reliées à la masse par l'intermédiaire d'un rhéostat de réglage de luminosité (730) et reliées à une borne d'alimentation positive par l'intermédiaire du trajet de conduction principal émetteur-collecteur d'un transistor NPN (732) alimenté sur sa base par un signal de commande haché.

26. Tableau de bord selon l'une des revendications 1 à 25, caractérisé par le fait qu'il comprend plusieurs témoins (610) reliés à la masse par l'intermédiaire d'interrupteurs de commande respectifs (740) et reliés à une borne d'alimentation positive par l'intermédiaire du trajet de conduction principal émetteur-collecteur d'un transistor NPN (742) alimenté sur sa base par un signal de commande haché.

27. Tableau de bord selon l'une des revendications 1 à 26, caractérisé par le fait qu'il comprend plusieurs témoins (610) reliés à une borne d'alimentation positive par l'intermédiaire d'interrupteurs de commande respectifs (750) et reliés à la masse par l'intermédiaire du trajet de conduction principal émetteur-collecteur d'un transistor PNP (752) alimenté sur sa base par un signal de commande haché.

28. Tableau de bord selon l'une des revendications 25 à 27, caractérisé par le fait que le signal de commande appliqué sur la base des transistors (732, 742 ou 752) posséde un rapport cyclique variable, commandé par tous moyens appropriés pour régler la tension d'alimentation effective des lampes (610), en dessous d'un seuil de limitation imposé.

29. Tableau de bord selon l'une des revendications 12 à 14, caractérisé par le fait que des pentes (316) ou courbures (318) sont prévues dans la demi-épaisseur arrière de la pièce optique (300).

30. Tableau de bord selon l'une des revendications 1 à 29, caracérisé par le fait qu'il comprend en outre un afficheur (800) placé sur la face avant du circuit imprimé (400) en regard d'une fenêtre (350) formée dans la pièce optique (300).

31. Tableau de bord selon la revendication 30, caractérisé par le fait que l'afficheur (800) est un afficheur à cristaux liquides.

32. Tableau de bord selon l'une des revendications 30 à 31, caractérisé par le fait que la fenêtre (350) est de même configuration que l'afficheur (800) mais possède des dimensions inférieures à celles de l'afficheur (800).

33. Tableau de bord selon l'une des revendications 30 à 32, caractérisé par le fait que le cadran (200) s'étend au delà de la fenêtre (350) formée dans la pièce optique (300), pour cacher au moins partiellement les flancs (352) de la fenêtre (350).

34. Tableau de bord selon l'une des revendications 30 à 33, caractérisé par le fait que le cadran (200) est muni sur sa face avant et autour de la fenêtre (350), d'un liseret (250) en matériau opaque qui permet de cacher le pourtour de l'afficheur (800).

35. Tableau de bord selon l'une des revendications 30 à 34, caractérisé par le fait que l'une au moins des faces de la tranche (352) de la fenêtre (350) est adaptée pour diriger au moins une partie du faisceau optique guidée dans là pièce (300) vers l'afficheur (800).

36. Tableau de bord selon l'une des revendications 30 à 35, caractérisé par le fait que la pièce optique (300) est munie d'un fond coloré sur la majeure partie de sa surface arrière.

37. Tableau de bord selon l'une des revendications 30 à 36, caractérisé par le fait que la fenêtre (350) comprend au moins une face active (352) choisie dans le groupe comprenant des surfaces : a) droite, oblique par rapport aux faces principales de la pièce (300), b) oblique courbée convexe, c) oblique courbée concave, d) droite et équipée de lentilles de Fresnel, e) oblique et équipée de lentilles de Fresnel, munie d'une surface diffusante ou g) munie d'une optique diffractive.

## Patentansprüche

1. Armaturenbrett für Kraftfahrzeuge, das durch einen Drehzeiger wenigstens eine analoge Information liefert, umfassend:
. ein Gehäuse (100), tragend:
. eine Anzeige, gebildet durch eine Skalentafel (200), bestehend aus einer Kunststoffplatte, die einerseits einen farbigen Hintergrund und andererseits diverse Angaben in Form von lichtdurchlässigen Platten (210, 212, 214, 216, 220, 222) umfaßt,
. ein Teil (300), gebildet durch eine ebene Platte aus optisch transparentem Material, angeordnet hinter der Anzeige, das ein als Lichtleiter dienendes optisches Teil (300) bildet und auf seiner Rückseite ein Reflektor-Diffusor-Element (340) umfaßt,
. eine Platte (400) mit einer gedruckten Schaltung, angeordnet auf der Rückseite des einen Lichtleiter bildenden Teils (300), wobei diese Platte verschiedene elektrische Organe trägt und wenigstens ein Drehantriebsorgane (520), das auf seiner Ausgangsachse eine Nadel bzw. einen Zeiger (524) trägt, der auf der Vorderseite der Skalentafel (200) angeordnet ist, und
. Lichtquellen (600), dem optischen Teil (300) zugeordnet,
dadurch gekennzeichnet,
. daß die Platte mit der gedruckten Schaltung (400) eine im wesentlichen hinter dem Teil (300) befindliche Position einnimmt, wobei diese Platte (400) auf der Rückseite des Reflektor-Diffusor-Elements (340) angefügt ist, das seinerseits an die Rückseite des einen Lichtleiter bildenden Teils (300) angrenzt, und
. daß die elektrischen Organe (520) durch die Rückseite der Platte mit der gedruckten Schaltung (400) getragen werden,
. daß das Reflektor-Diffusor-Element (340) durch eine weiße Farbschicht auf der Gesamtheit der Rückseite des optischen Teils (300) gebildet wird, und der farbige Hintergrund der Skalentafel (200) durch einen lichtdurchlässigen farbigen Hauptbereich gebildet wird, so daß die Versorgung der Lichtquellen (600) ermöglicht, in der Skalentafel (200) einen leuchtenden, kontinuierlichen farbigen Hintergrund herzustellen.

2. Armaturenbrett nach Anspruch 1, dadurch gekennzeichnet, daß die Lichtquellen (600) sich in Aufnahmen (310) befinden, die in der Dicke des optischen Teils (300) ausgebildet sind.

3. Armaturenbrett nach einem der Ansprüche 1 oder 2, dadurch gekennzeichnet, daß das optische Teil (300) auf wenigstens einem Teil seines Umfangs ein dachförmiges Prisma (320) umfaßt, gebildet durch zwei Facetten (322, 324), um ungefähr 45° geneigt in bezug auf die Hauptflächen (302, 304) des optischen Teils.

4. Armaturenbrett nach einem der Ansprüche 1 oder 2, dadurch gekennzeichnet, daß das optische Teil (300) auf wenigstens einem Teil seiner Schnittfläche mit einem reflektierenden Überzug oder einem katadioptrischen System versehen ist.

5. Armaturenbrett nach einem der Ansprüche 3 oder 4, dadurch gekennzeichnet, daß wenigstens ein Teil der Kontur des optischen Teils (300) vom konischen Typ ist, z.B. elliptisch, parabolisch oder hyperbolisch, konvex oder konkav.

6. Armaturenbrett nach einem der Ansprüche 1 bis 5, dadurch gekennzeichnet, daß wenigstens die Mehrzahl der elektrischen Organe (500, 520) auf der gedruckten Schaltung (400) festgelötet ist (par soudure ä la vague).

7. Armaturenbrett nach einem der Ansprüche 1 bis 6, dadurch gekennzeichnet, daß die Lichtquellen (600) im wesentlichen monochromatisch sind, vorzugsweise vom Elektrolumineszendiodentyp.

8. Armaturenbrett nach einem der Ansprüche 1 bis 7, dadurch gekennzeichnet, daß die Lichtquellen (600) sich am Umfang des optischen Teils (300) befinden und durch ein Element (120) des Gehäuses (100) überdeckt werden.

9. Armaturenbrett nach einem der Ansprüche 1 bis 8, dadurch gekennzeichnet, daß es eine Flüssigkristallanzeige umfaßt.

10. Armaturenbrett nach einem der Ansprüche 1 bis 9, dadurch gekennzeichnet, das es eine biegsame Flüssigkristallanzeige umfaßt.

11. Armaturenbrett nach einem der Ansprüche 9 oder 10, dadurch gekennzeichnet, daß die Flüssigkristallanzeige versorgt wird durch eine mehrspurige Zwischenverbindungseinrichtung, angeordnet in einem zusätzlichen Fenster in dem optischen Teil (300) und gebildet durch einen Stapel von Schichten aus elastischen Materialien mit abwechselnd elektrisch leitenden und elektrisch isolierenden Eigenschaften.

12. Armaturenbrett nach einem der Ansprüche 1 bis 11, dadurch gekennzeichnet, daß die Lichtquellen (610) in Aufnahmen (310) des optischen Teils (300) sitzen und diese Aufnahmen (310) im vorderen Teil des optischen Teils (300) mit einer Schräge (316) oder einer Krümmung (318) versehen sind.

13. Armaturenbrett nach Anspruch 12, dadurch gekennzeichnet, daß der Brennpunkt (612) der Lichtquellen (610) sich in der Dicke des optischen Teils (300) befindet.

14. Armaturenbrett nach einem der Ansprüche 12 oder 13, dadurch gekennzeichnet, daß die Schrägen (316) oder Krümmungen (318) gestaltet sind, um die aus den Quellen (610) austretenden Strahlen abzulenken, so daß diese Strahlen die den Aufnahmen (310) nahen Zonen nicht direkt beleuchten.

15. Armaturenbrett nach einem der Ansprüche 12 bis 14, dadurch gekennzeichnet, daß die Schrägen (316) oder Krümmungen (318) auf die vordere Halbdicke des optischen Teils (300) begrenzt bzw. beschränkt sind.

16. Armaturenbrett nach einem der Ansprüche 12 bis 15, dadurch gekennzeichnet, daß die Schräge (316) die Form eines Konus aufweist, der auf die Achse einer Aufnahme (310) zentriert ist und sich in Richtung Vorderseite (302) des optischen Teils (300) erweitert.

17. Armaturenbrett nach einem der Ansprüche 12 bis 16, dadurch gekennzeichnet, daß für eine Aufnahme (310) des Durchmessers 9mm und ein optisches Teil (300) einer Dicke von 6mm die Schräge (316) die Form eines Konus mit dem Winkel ä in der Größenordnung von 30° über die vorderen 2mm des optischen Teils (300) aufweist.

18. Armaturenbrett nach einem der Ansprüche 12 bis 15, dadurch gekennzeichnet, daß die Krümmung (318) die Form einer konvexen torischen Kalotte hat, zentriert auf die Achse einer Aufnahme (310) und erweitert in Richtung Vorderseite (302) des optischen Teils (300) .

19. Armaturenbrett nach einem der Ansprüche 12 bis 15 oder 18, dadurch gekennzeichnet, daß für eine Aufnahme (310) des Durchmessers 9mm und ein optisches Teil (300) einer Dicke von 6mm die Krümmung gebildet wird von einer torischen Fläche (318) mit einem Innenradius in der Größenordnung von 4mm.

20. Armaturenbrett nach einem der Ansprüche 1 bis 19, dadurch gekennzeichnet, daß es Einrichtungen zum Regulieren der Versorgungsspannung der Beleuchtungsquellen und der Kontroll- bzw. Anzeigelampen (610) umfaßt.

21. Armaturenbrett nach Anspruch 20, dadurch gekennzeichnet, daß die Regulierung durch Gleichstrom oder zerhackten Strom erfolgt.

22. Armaturenbrett nach einem der Ansprüche 1 bis 21, dadurch gekennzeichnet, daß es mehrere Beleuchtungslampen (610) enthält, mit Masse verbunden über einen Regelwiderstand (700) zum Einstellen der Leuchtstärke, und verbunden mit einem positiven Versorgungsanschluß durch den Emitter-Kollektor-Hauptleitpfad eines NPN-Transistors (702), wobei dieser Transistor (702) an seiner Basis vorgespannt ist über einen Widerstand (704), außerdem verbunden mit dem vorerwähnten positiven Versorgungsanschluß, und das Versorgungspotential der Lampen (610) durch eine Zenerdiode (706) festgelegt wird, die zwischen den Transistor (702) und die Masse eingeschaltet ist.

23. Armaturenbrett nach einem der Ansprüche 1 bis 22, dadurch gekennzeichnet, daß es mehrere Anzeigelampen (610) umfaßt, mit Masse verbunden über Steuerschalter (710) und mit einem positiven Versorgungsanschluß verbunden über den Emitter-Kollektor-Hauptleitpfad eines NPN-Transistors (712), wobei die Basis dieses Transistors (712) vorgespannt wird über einen Widerstand (714), außerdem verbunden mit dem vorerwähnten positiven Versorgungsanschluß, und das Versorgungspotential der Lampen (610) durch eine Zenerdiode (716) festgelegt wird, eingeschaltet zwischen den Transistor (712) und die Masse, Kathode auf der Seite der Basis des Transistors (712), und die Kontrollbez. Anzeigelampen (610) vorzugsweise mit dem Emitter des Transistors (712) jeweils durch Dioden (718) verbunden sind.

24. Armaturenbrett nach einem der Ansprüche 1 bis 23, dadurch gekennzeichnet, daß es mehrere Anzeigelampen (610) umfaßt, jeweils über Steuerschalter (720) mit einem positiven Versorgungsanschluß verbunden und mit der Masse verbunden durch den Emitter-Kollektor-Hauptleitpfad eines PNP-Transistors (722), wobei diese Basis die Transistors (722) vorgespannt wird über einen Widerstand (724), außerdem mit der Masse verbunden, und das Versorgungspotential der Lampen (610) durch eine Zenerdiode (726) festgelegt wird, eingeschaltet zwischen den Transistor (722) und den positiven Versorgungsanschluß, und die Kontroll- bzw. Anzeigelampen (610) vorzugsweise mit dem Emitter des Transistors (722) verbunden sind, jeweils durch Dioden (718).

25. Armaturenbrett nach einem der Ansprüche 1 bis 24, dadurch gekennzeichnet, daß es mehrere Beleuchtungslampen (610) umfaßt, über einen Regelwiderstand (730) zum Einstellen der Leuchtstärke mit der Masse verbunden und durch den Emitter-Kollektor-Hauptleitpfad eines NPN-Transistors (732), der an seiner Basis mit einem zerhackten Steuersignal gespeist wird, mit einem positiven Versorgungsanschluß verbunden.

26. Armaturenbrett nach einem der Ansprüche 1 bis 25, dadurch gekennzeichnet, daß es mehrere Anzeigelampen (610) umfaßt, jeweils über Steuerschalter (740) mit der Masse verbunden und durch den Emitter-Kollektor-Hauptleitpfad eines NPN-Transistors (742), der an seiner Basis mit einem zerhackten Steuersignal gespeist wird, mit einem positiven Versorgungsanschluß verbunden.

27. Armaturenbrett nach einem der Ansprüche 1 bis 26 dadurch gekennzeichnet, daß es mehrere Anzeigelampen (610) umfaßt, jeweils über Steuerschalter (750) mit einem positiven Versorgungsanschluß verbunden und durch den Emitter-Kollektor-Hauptleitpfad eines PNP-Transistors (752), der an seiner Basis mit einem zerhackten Steuersignal gespeist wird, mit der Masse verbunden.

28. Armaturenbrett nach einem der Ansprüche 25 bis 27, dadurch gekennzeichnet, daß das an die Basis der Transistoren (732, 742 und 752) gelegte Signal ein variables zyklisches Verhältnis besitzt, gesteuert durch jedes geeignet Mittel, um die effektive Versorgungsspannung der Lampen (610) zu regeln, unterhalb einer vorgeschriebenen Begrenzungsschwelle.

29. Armaturenbrett nach einem der Ansprüche 12 bis 14, dadurch gekennzeichnet, daß die Schrägen (316) oder Krümmungen (318) in der hinteren Halbdicke des optischen Teils (300) vorgesehen sind.

30. Armaturenbrett nach einem der Ansprüche 1 bis 29, dadurch gekennzeichnet, daß es außerdem eine Anzeige (800) umfaßt, angeordnet auf der Vorderseite der gedruckten Schaltung (400), einem in dem optischen Teil (300) ausgebildeten Fenster (350) gegenüberstehend.

31. Armaturenbrett nach Anspruch 30, dadurch gekennzeichnet, daß die Anzeige (800) eine Flüssigkristallanzeige ist.

32. Armaturenbrett nach einem der Ansprüche 30 bis 31, dadurch gekennzeichnet, daß das Fenster (350) die gleiche Form wie die Anzeige (800) aufweist, aber kleinere Abmessungen als diese Anzeige (800) hat.

33. Armaturenbrett nach einem der Ansprüche 30 bis 32, dadurch gekennzeichnet, daß die Skalentafel (200) sich über das in dem optischen Teil (300) ausgebildeten Fensters (350) hinaus erstreckt, um die Flanken (352) des Fensters (350) wenigstens partiell zu verdecken.

34. Armaturenbrett nach einem der Ansprüche 30 bis 33, dadurch gekennzeichnet, daß die Skalentafel (200) auf ihrer Vorderseite und um das Fenster 350 herum mit einer Randleiste (250) aus opakem Material versehen ist, die ermöglicht, den Umriß bzw. äußeren Umfang der Anzeige (800) zu verdecken.

35. Armaturenbrett nach einem der Ansprüche 30 bis 34, dadurch gekennzeichnet, daß wenigstens die Schnittflächen (352) des Fensters (350) angepaßt sind, um wenigstens einen Teil des in dem Teil (300) geleiteten optischen Bündels in Richtung Anzeige (800) zu lenken.

36. Armaturenbrett nach einem der Ansprüche 30 bis 35, dadurch gekennzeichnet, daß das optische Teil (300) über den größten Teil seiner hinteren Fläche einen farbigen Hintergrund hat.

37. Armaturenbrett nach einem der Ansprüche 30 bis 36, dadurch gekennzeichnet, daß das Fenster (350) wenigstens eine aktive Fläche (352) aufweist, ausgewählt aus der Gruppe, die folgende Flächen umfaßt: a) gerade, schräg in bezug auf die Hauptflächen des Teils (300), b) schräg gekrümmt konvex, c) schräg gekrümmt konkav, d) gerade und mit Fresnel-Linsen ausgestattet, e) schräg und mit Fresnel-Linsen ausgestattet, f) versehen mit einer streuenden Oberfläche oder g) versehen mit einer beugenden bzw. ablenkenden Optik.

## Claims

1. A dashboard for motor vehicles providing analog information by means of a rotary needle, the dashboard being of the type comprising:
a housing (100) which carries:
an indicator element constituted by a dial (200) formed of a sheet of plastics material comprising firstly a colored background, and secondly various indications in the form of translucent zones (210, 212, 214, 216, 220, 222);
a part (300) formed of a plane plate made of a material that is optically transparent, and placed behind the dial, which part constitutes an optical part (300) serving as a light guide, and is provided with a reflector/diffuser element (340) on its back face;
a printed-circuit board (400) placed on the back of the part (300) forming a light guide, which board carries various electrical members including at least one rotary drive member (520) carrying on its outlet shaft a needle (524) disposed on the front of the dial (200); and
light sources (600) associated with the optical part (300);
said dashboard being characterized by the fact that:
the printed-circuit board (400) is placed in a position such that it substantially touches the back of the part (300), the printed-circuit board (400) touching the back face of the reflector/diffuser element (340), itself adjacent to the back face of the part (300) forming the light guide; and
the electrical members (520) are carried on the back face of the printed-circuit board (400),
the reflector/diffuser element (340) is constituted by a layer of white paint over the entire back surface of the optical part (300) and the colored background of the dial (200) is constituted by a main colored translucent zone, such that by powering the light sources (600), it is possible to obtain an uninterrupted luminous colored background over the dial (200).

2. A dashboard according to claim 1, characterized by the fact that the light sources (600) are placed in recesses (310) formed in the thickness of the optical part (300).

3. A dashboard according to claim 1 or 2, characterized by the fact that the optical part (300) is provided, at least over a portion of its periphery, with a roof prism (320) formed of two facets (322, 324) inclined by about 45° relative to the main faces (302, 304) of the optical part.

4. A dashboard according to claim 1 or 2, characterized by the fact that the optical part (300) is provided, at least over a portion of its edge, with a reflective coating or with a retroreflector system.

5. A dashboard according to claim 3 or 4, characterized by the fact that at least a portion of the outline of the optical part (300) is of the conical type, e.g. elliptical, parabolic, or hyperbolic, and convex or concave.

6. A dashboard according to any one of claims 1 to 5, characterized by the fact that at least the majority of the electrical members (500, 520) are fixed to the printed circuit (400) by flow soldering.

7. A dashboard according to any one of claims 1 to 6, characterized by the fact that the light sources (600) are essentially monochromatic, and preferably of the light-emitting diode type.

8. A dashboard according to any one of claims 1 to 7, characterized by the fact that the light sources (600) are placed on the periphery of the optical part (300) and are covered by an element (120) of the housing (100).

9. A dashboard according to any one of claims 1 to 8, characterized by the fact that it includes a liquid-crystal display.

10. A dashboard according to any one of claims 1 to 9, characterized by the fact that it includes a flexible liquid-crystal display.

11. A dashboard according to claim 9 or 10, characterized by the fact that the liquid-crystal display is powered via a multi-path interconnection device placed in a complementary window provided in the optical part (300) and made up of a stack of layers of resilient material alternately electrically conductive and electrically insulating.

12. A dashboard according to any one of claims 1 to 11, characterized by the fact the light sources (610) are placed in recesses (310) in the optical part (300) and said recesses (310) are provided with respective slopes (316) or curves (318) in the front portion of the optical part (300).

13. A dashboard according to claim 12, characterized by the fact that the focal points (612) of the light sources (610) are situated in the thickness of the optical part (300).

14. A dashboard according to claim 12 or 13, characterized by the fact that the slopes (316) or curves (318) are designed to deflect the rays output by the sources (610) so that the rays do not directly light the regions close to the recesses (310).

15. A dashboard according to any one of claims 12 to 14, characterized by the fact that the slopes (316) or curves (318) are limited to the front half-thickness of the optical part (300).

16. A dashboard according to any one of claims 12 to 15, characterized by the fact that each slope (316) is in the form of a cone centered on the axis of the corresponding recess (310) and flared going towards the front face (302) of the optical part (300).

17. A dashboard according to any one of claims 12 to 16, characterized by the fact that for a recess (310) of diameter 9 mm, and an optical part (300) of thickness 6 mm, the slope (316) is in the form of a cone of angle α of about 30° over the front 2 mm of the optical part (300).

18. A dashboard according to any one of claims 12 to 15, characterized by the fact that each curve (318) is in the form of a convex toroidal cap centered on the axis of the corresponding recess (310) and flared going towards the front face (302) of the optical part (300).

19. A dashboard according to any one of claims 12 to 15 or 18, characterized by the fact that, for a recess (310) of diameter 9 mm and an optical part (300) of thickness 6 mm, the curve is formed of a toroidal surface (318) of radius less than about 4 mm.

20. A dashboard according to any one of claims 1 to 19, characterized by the fact that it includes means designed to regulate the power supply voltage of the lighting sources and of the indicator lamps (610).

21. A dashboard according to claim 20, characterized by the fact that the regulation is performed in direct current or in chopped current.

22. A dashboard according to any one of claims 1 to 21, characterized by the fact that it includes a plurality of lighting lamps (610) connected to ground via a brightness-adjusting rheostat (700), and connected to a positive power supply terminal via the emitter-collector main conduction path of an NPN transistor (702) which has its base biased by a resistor (704) also connected to the above-mentioned positive power supply terminal, the power supply potential of the lamps (610) being set by a Zener diode (706) connected between the base of the transistor (702) and ground.

23. A dashboard according to any one of claims 1 to 22, characterized by the fact that it includes a plurality of indicator lamps (610) connected to ground via respective control switches (710) and connected to a positive power supply terminal via the emitter-collector main conduction path of an NPN transistor (712) which has its base biased by a resistor (714) also connected to the above-mentioned positive power supply terminal, the power supply potential of the lamps (610) being set by a Zener diode (716) connected between the base of the transistor (712) and ground, with the cathode at the base of the transistor (712), and with the indicator lamps (610) preferably being connected to the emitter of the transistor (712) via respective diodes (718).

24. A dashboard according to any one of claims 1 to 23, characterized by the fact that it includes a plurality of indicator lamps (610) connected to a positive power supply terminal via respective control switches (720), and connected to ground via the emitter-collector main conduction path of a PNP transistor (722) which has its base biased by a resistor (724) also connected to ground, the power supply potential of the lamps (610) being set by a Zener diode (726) connected between the base of the transistor (722) and the positive power supply terminal, and the indicator lamps (610) preferably being connected to the emitter of the transistor (722) via respective diodes (728).

25. A dashboard according any one of claims 1 to 24, characterized by the fact that it includes a plurality of lighting lamps (610) connected to ground via a brightness-adjusting rheostat (730) and connected to a positive power supply terminal via the emitter-collector main conduction path of an NPN transistor (732) whose base is fed with a chopped control signal.

26. A dashboard according to any one of claims 1 to 25, characterized by the fact that it includes a plurality of indicator lamps (610) connected to ground via respective control switches (740) and connected to a positive power supply terminal via the emitter-collector main conduction path of an NPN transistor (742) whose base is fed with a chopped control signal.

27. A dashboard according to any one of claims 1 to 26, characterized by the fact that it includes a plurality of indicator lamps (610) connected to a positive power supply terminal via respective control switches (750) and connected to ground via the emitter-collector main conduction path of a PNP transistor PNP (752) whose base is fed with a chopped control signal.

28. A dashboard according to any one of claims 25 to 27, characterized by the fact that the control signal applied to the bases of the transistors (732, 742, 752) has a variable duty ratio controlled by any suitable means, for adjusting the effective power supply voltage of the lamps (610) below a set limit threshold.

29. A dashboard according to any one of claims 12 to 14, characterized by the fact that the slopes (316) or curves (318) are provided in the back half-thickness of the optical part (300).

30. A dashboard according to any one of claims 1 to 29, characterized by the fact that it further includes a display (800) placed on the front face of the printed circuit (400) and facing a window (350) formed in the optical part (300).

31. A dashboard according to claim 30, characterized by the fact that the display (800) is a liquid-crystal display.

32. A dashboard according to claim 30 or 31, characterized by the fact that the window (350) is of the same configuration as the display (800), but it has dimensions smaller than those of the display (800).

33. A dashboard according to any one of claims 30 to 32, characterized by the fact that the dial (200) extends beyond the window (350) formed in the optical part (300), to mask the sides (352) of the window (350) at least in part.

34. A dashboard according to any one of claims 30 to 33, characterized by the fact that, on its front face and around the window (350), the dial (200) is provided with edging (250) made of an opaque material enabling the periphery of the display (800) to be masked.

35. A dashboard according to any one of claims 30 to 34, characterized by the fact that at least one of the faces of the edge (352) of the window (350) is adapted to direct at least a portion of the light beam guided in the part (300) towards the display (800).

36. A dashboard according to any one of claims 30 to 35, characterized by the fact that the optical part (300) is provided with a colored background over most of its back surface.

37. A dashboard according to any one of claims 30 to 36, characterized by the fact that the window (350) includes at least one active face (352) chosen from the group comprising the following surfaces: a) straight, sloping relative to the main faces of the part (300), b) sloping, curved, and convex, c) sloping, curved, and concave, d) straight and provided with Fresnel lenses, e) sloping and provided with Fresnel lenses, f) provided with a diffusing surface, or g) provided with a diffractive optical system.
